# EUROPEAN PATENT APPLICATION

(11) **EP 1 953 745 A1**
(43) Date of publication of application: **06.08.2008**
(21) Application number: 07001865.0
(22) Date of filing: 29.01.2007
(51) Int. Cl.: G11B 7/013, G11B 7/24, G11B 23/00, G11B 7/0037, G11B 7/26, G11B 7/007

(54) **EcoDisc**

(71) Applicant: ODS Technologies GmbH, 23942 Dassow (DE)
(72) Inventor: Nute, Roger, 49490 Chigné (FR); Fetouhi, Al, 77100 Nanteuil-lès-Meaux (FR)
(74) Representative: Peterreins, Frank

(57) **Abstract**

The present invention relates to DVDs. According to the present invention, the recording layer is at least partially or entirely positioned at a distance T₇ of less than 0.4 mm with respect to the second surface. Therefore, when the optical recording medium of the present invention is clamped in a drive, the recording layer has a "higher" position than a recording layer of a known DVD. The layer structure of the inventive optical recording medium is a key feature of reducing the thickness of the disc in an area of the recording layer. In particular, a thickness T₁ of only 0.4 to 0.7 mm is possible while remaining the reliability of the optical recording medium (i.e. without reading problems in most or all drives). Further, it is achieved that the optical recording medium may have only one substrate, i.e. only one disc of polycarbonate, whereas the other side of the recording layer is only covered by a protective lacquer. With that, manufacturing of the inventive optical recording medium is facilitated and more cost-efficient.

## Description

### Field and background of the invention:

The present invention relates to a recording medium, in particular to an optical recording medium including a substrate and a signal recording layer provided on the substrate.

As one of the conventional recording media for audio, video and/or other information, optical discs such as CDs and DVDs, from which recorded information is read using a light beam or to which information is written using a light beam, are widely used. Since such an optical disc is formed from a single plate-like substrate, it can easily be handled and has a larger storage capacity than other recording media such as magnetic tapes, etc.. Therefore, the optical discs are widely used as media for recording audio and video information, computer-processed data, etc. Recording media for audio, video and/or other information, such as CDs and DVDs are e.g. known from US 5,541,910, US 5,864,534, US 6,002,663, US 6,252,842 and US 2002/0034154 A1.

Information processing units, such as computers, CD/DVD players, digital cameras and video cameras, have been designed more and more compact with an increasingly smaller internal space of installation for a recording and/or reproducing apparatus using an optical recording medium such as an optical disc or the like. Accordingly, optical discs are also known in the prior art, e.g. from US 2004/0228263 A1, which only have a diameter of 65 mm or less.

US 2004/0228263 A1 discloses an optical disc having a thickness of only 0.4 mm to 0.7 mm, i.e. significantly thinner than conventional optical discs which have a thickness of about 1.2 mm. Such optical discs are also called light weight optical discs (LODs) or thin video discs (TVDs). With this measure it is achieved to reduce the amount of material which is necessary for manufacturing an optical disc and thus to significantly reduce the manufacturing costs. However, in the area around the axis of the optical disc described in US 2004/0228263 A1 - the so called clamping area -, the substrate has a thickness of 1.2 mm, because this distance is prescribed for conventional recording and/or reproducing devices (e.g. drives for computers or CD/DVD players). However, the optical disc disclosed in US 2004/0228263 A1 has the drawback that the physical and optical properties are not satisfying. As a result, this optical disc is not a reliable recording medium.

### Objects and summary of the invention:

It is an object of the present invention to provide a novel light weight optical recording medium which has an increased reliability. In particular, the novel optical recording medium should meet the prescribed tolerances of various types of recording and/or reproducing devices so that problems concerning playability are reduced or avoided.

It is another object of the present invention to provide a novel light weight optical recording medium which has an increased data capacity.

It is yet another object of the present invention to provide a novel light weight optical recording medium which has improved optical properties, In particular, birefringence effects should be reduced.

It is yet another object of the present invention to provide a method for manufacturing a novel light weight optical recording medium according to the present invention.

The present invention refers to an optical recording medium comprising a substrate (e.g. made of polycarbonate) and at least one recording layer for storing data, wherein the structure of the recording layer is formed such that the data can be read using a light having a wavelength of in particular 650 nm ± 50 nm, or less, e.g. 405 nm ± 30 nm. A wavelength of 650 nm is used for reading DVDs, whereas CDs can only be read with a wavelength of 780 nm. From a structural point of view, the structure of the recording layer has pits and lands with a height difference of 650nm / 4 ± 10%. Due to the reflection at the pits and lands, there is a phase difference of λ/2 which results in interference effects so that the photo detectors of the reading device can read the optical recording medium.

A storage medium according to the present invention should preferably be readable by a vast majority of DVD players of the consumer market. This includes actual models (by beginning of the year 2007) as well as types being several years old and in a used condition, including typical DVD players which are integrated into computers and the like. The term "vast majority" is to be understood that at least 80%-90% of the players existing in the average household should be able to read and play an optical recording medium according to the present invention. There is no specified standard for DVD players. The DVD players are designed according to the very detailed specification of the DVD, in particular the different types like DVD-5, DVD 9 and the like. As far as the term "DVD" is used in the present document, it is to be understood as a DVD according to the mentioned standard specification. Such specification is contained e.g. in the document "DVD Specifications for Read-Only Disc, Part 1, Physical Specifications"; Version 1.04, June 2002; publisher: DVD Format/Logo Licensing Corporation, Daimon Urban-ist Bldg. 6F, 2-3-6 Shibadaimon, Minato-ku Tokyo, 105-0012 Japan; homepage: www.dvdfllc.co.jp. This document is herewith incorporated by reference.

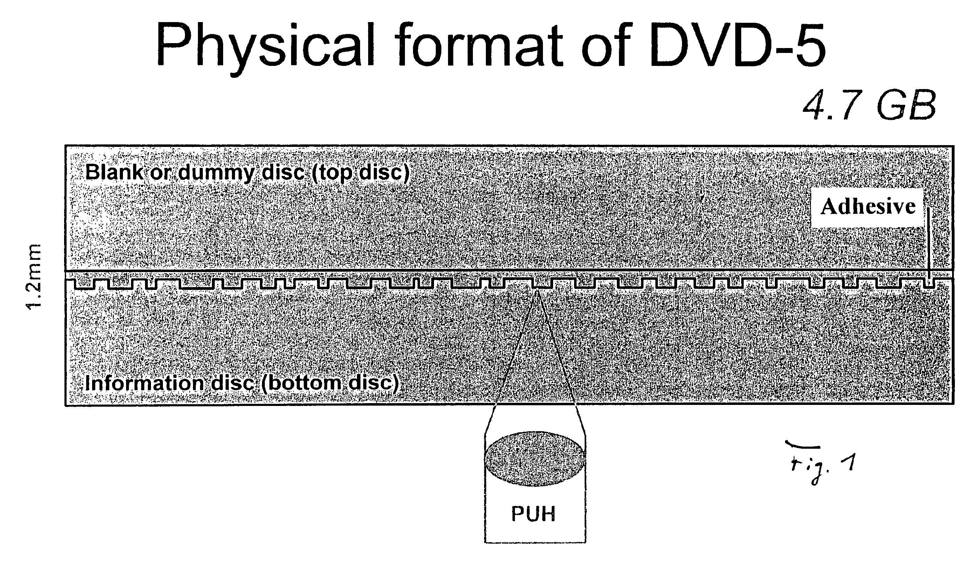

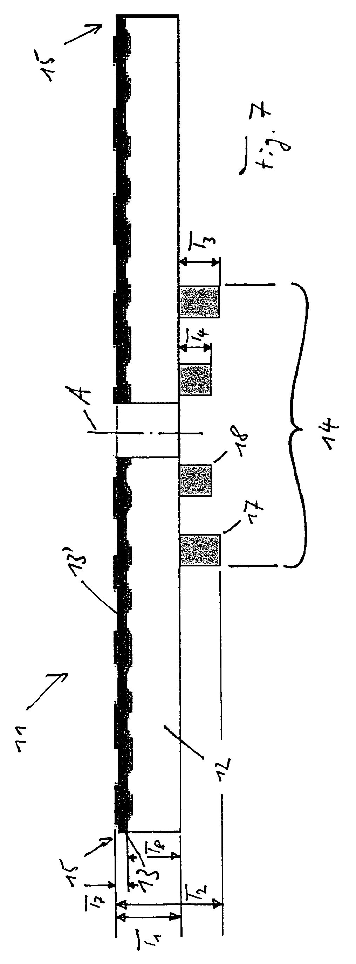

According to one aspect of the present invention, the recording layer is at least partially or entirely positioned at a distance T₇ of less than 0.4 mm with respect to the second surface (see Fig. 7; cf. claims 1 and 2). In particular, the recording layer may be positioned at a distance T₇ of less than 0.3 mm with respect to the second surface. The (upper) second surface is usually covered by a printing layer so that the optical recording medium is designed to be read with a laser which is positioned on the side of the (lower) first surface of the optical recording medium. With that, the optical recording medium of the present invention has a recording layer of a DVD, whereas the recording layer is positioned at a height as the recording layer of a known CD as will be explained in more detail in context with Figs. 1 to 7. The inventive recording medium thus has a recording layer which is very closely positioned to the (upper) second surface, whereas the recording layer of known DVDs is in the middle of recording medium (sandwiched between to discs of polycarbonate). Therefore, when the optical recording medium of the present invention is clamped in a drive, the recording layer has a "higher" position than a recording layer of a known DVD.

Many DVD drives are only designed to read DVDs having a recording layer in the middle of the disc. However, the inventive optical recording medium can be read with a drive which is suitable for reading DVDs and CDs, because such drives have a height adjustable reading means. As a result, the layer structure of the inventive optical recording medium is an important feature for reducing the thickness of the disc in an area of the recording layer. In particular, a thickness T₁ of only 0.4 to 0.7 mm is possible (see Fig. 7) while remaining the reliability of the optical recording medium (i.e. without reading problems in most or all drives). Further, it is achieved that the optical recording medium may have only one substrate, i.e. only one disc of polycarbonate, whereas the other side of the recording layer may only be covered by a protective lacquer. With that, manufacturing of the inventive optical recording medium is facilitated and more cost-efficient. In particular, only 7.7 to 8.0 grams polycarbonate are needed for manufacturing an optical recording medium according to the present invention compared to about 13-20 grams polycarbonate for a DVD-5.

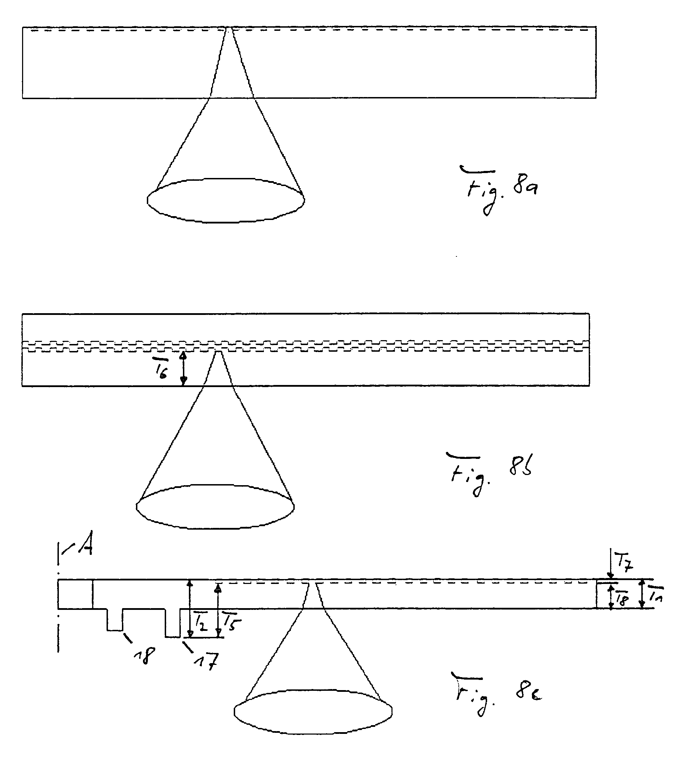

According to a second aspect of the present invention, the recording layer is at least partially positioned at a distance T₅ of more than 0.9 mm from a plane defined by a surface of a clamping area of the optical recording medium (see Fig. 8c; cf. claims 8 and 9). The clamping area preferably defines the maximum thickness T₂ of the optical recording medium, wherein there is a height difference between lowest surface of the clamping area and the (lower) first surface of the optical recording medium. Therefore, the mentioned plane is a virtual plane below the first surface which is perpendicular to the axis A of the optical recording medium, and which is further defined by the lowest point(s) or lowest surface of the clamping area of the optical recording medium. As a result, the recording layer is arranged at a higher position (namely more than 0.9 mm with respect to the lowest surface of the clamping area) when the optical recording medium is clamped in a drive, whereas the recording layer of a known DVD is arranged at a position of about 0.6 mm with respect to the lowest surface of the clamping area.

According to a third aspect of the present invention, the optical recording medium has a clamping area with a thickness T₂ which is greater than the distance T₁ between the first surface and the second surface, wherein the recording layer is at least partially or entirely positioned at a distance T₈ of more than 0.4 mm from the first surface (see Figs. 7 and 8c; cf. claims 13 and 14). Preferably, the increased thickness of the clamping area results in that the position of the recording layer is at a height of more than 0.9 mm with respect to the lowest surface of the clamping area.

According to a fourth aspect of the present invention, the optical recording medium has a first ring on the (lower) first side of the optical recording medium which extends at least in the outer section of the clamping area of the optical recording medium (cf. claim 16). According to the present DVD/CD standard, the clamping area is defined by an area located within a radius of about 16 or 17 mm with respect to the axis of the optical recording medium (the diameter of the clamping area is about 35 mm). Further, it is preferred to provide a second ring on the first side of the optical recording medium which extends at least in the inner section of the clamping area of the optical recording medium.

The first ring has a thickness T₃ which is slightly greater than the thickness T₄ of the second ring (see Fig. 7). When both rings are pressed down to a flat surface of a clamping means, the (outer) first ring touches the surface first, and then - by increasing the clamping force - the (inner) second ring also touches the surface so that the inner edge of the optical recording medium is deformed downwardly with respect to the area at the (outer) first ring. As a result, the optical recording medium has an improved shape stability when it is clamped in a drive so that the playability is more reliable.

The present invention also provides measures for significantly increasing the data capacity compared to a DVD-5 according to the state of the art.

According to a fifth aspect of the present invention, the at least a data area comprises a spirally wound track path of data structures, the track path having an essentially constant track pitch (TP) of adjacent tracks in a radial direction, wherein the size of the track pitch (TP) is smaller than 710 nm (cf. claim 29). Due to the small track pitch, the total available length of the track path of a data region of a specified diameter is increased. The specification for a standard DVD defines the average track pitch of the standard DVD to be 740 nm with a maximum (local) deviation of +/- 30 nm. These values are the consequence of the specified wavelength of a readout laser. Experiments surprisingly turned out that the vast majority of existing DVD players of the consumer market, including actual models as well as several year old, used players, work reliably with inventive storage mediums with reduced track pitch.

In a specific embodiment, an average value of the track pitch is smaller than 700 nm. Most preferred, the average track pitch is between 670 nm and 690 nm, in particular approximately 680 nm. Leaving all other parameters unchanged, a track pitch of 680 nm leads to an increase of the available data capacity of a standard DVD by nearly 9%. Apart from the general benefits of a higher data capacity, an inventive storage medium with an entirely filled data region cannot be copied to any available writeable or re-writeable DVD, as these products are limited to a data capacity of 4.7 GB. The capacity cannot be increased for writeable media, as the track pitch is more critical here due to the writing process. Thereby, the storage medium according to the invention provides an easy and reliable option for copy protection of the data, wherein the device is reliably read even by older consumer DVD players.

In order to enhance the reliability in reading the medium even with old or low cost consumer DVD players, the track pitch of all tracks of the data area are within an interval of between -4% and +4% with respect of an average value of the track pitch.

In order to enhance the data capacity even more, the track path of the data area has a maximum diameter, the maximum diameter being greater than 95%, in particular at least 98 % of a total outer diameter of the recording medium. In a preferred embodiment, the maximum diameter of the track path is more than 116 mm, in particular approximately 118 mm, wherein the total outer diameter is approximately 120 mm. By those measures the available geometrical space of a standard DVD is used more effectively than specified. The standard DVD has a specified maximum diameter of the data area of 116 mm which is normally followed by a leadout area having an additional diameter of at least 1 mm. The diameter of the data area according to the invention provides an additional data capacity, which means an increase of the diameter of about 1.7 % in the case of a maximum diameter of 118 mm. As the areal data density is constant over the medium, the relative increase in data capacity goes with the relative increase in data containing area of the disc, which is more than 4% in the case of 118 mm.

In a preferred embodiment of the invention, the recording medium has a maximum data capacity of more than 4.7 GB, in particular at least 5.0 GB. Particularly preferred, the data capacity is higher than 5.2 GB, in particular approximately 5.4 GB. It is to be understood that the increase in data capacity can be achieved by means of a reduced track pitch, preferably but not necessarily in combination with an extended maximum diameter of the data region. Other parameters of the inventive storage medium like a minimum pit length a single data structure or the like, are within the scope of the specification of a standard DVD.

It is pointed out that especially in case the content of the storage medium is a movie, any even small enhancement of the data capacity is welcomed. Dependent on the coding, the typical movie playlength for a standard DVD of 4.7 GB capacity is about 120 Minutes. Many movies are slightly longer than this playlength, and also in most cases there is the wish to include advertising and/or bonus material. An increase of the data capacity of about 10% as it can be achieved by the invention would allow for a significantly wider selection of content for a single layer storage medium. The inventive storage medium is suited well in particular for rather low cost productions like incentives added to magazines or the like.

For an optical recording medium according to the preamble of claim 38, the objects of the invention are achieved by the characterizing part of claim 38.

According to a sixth aspect of the present invention, at least a region of the substrate has an optical birefringence value of more than 100 nm, in particular at least 105 nm, wherein the substrate in this region has a thickness of between approximately 0.4 mm and 0.7 mm (cf. claim 38). The throughput and hence cost effectiveness of production are enhanced the quicker a moulding process of the medium can be performed. On the other hand, a fast production step like a low duration of stay in a casting mould leads to high cooling rates or other effects causing a degraded optical performance of the substrate. In particular, the resulting optical property of birefringence is a crucial value. For a standard DVD, the maximum birefringence value allowed is specified as 100 nm. According to the invention, at least a region of the substrate has an optical birefringence value of more than 100 nm, in particular at least 105 nm, wherein the substrate in this region has a thickness of not more than approximately 0,6 mm. Experiments have shown the surprising effect that standard consumer DVD players can reliably play inventive storage media with the claimed birefringence values. This gives the benefit of a higher throughput in production and hence a significant cost reduction.

In a preferred embodiment, the birefringence value is lower than approximately 130 nm, in particular lower than 125 nm as it has turned out that a birefringence well above 130 nm starts to cause severe readout problems at least with a significant portion of DVD players. Most preferred, the birefringence value is between 110 nm and 120 nm in the region in question.

In an advantageous embodiment the region has a radial distance of at least 18 mm from a center of the medium. Most preferred, the region has a radial distance of less than approximately 36 mm from a center of the medium, in particular not more than 24 mm. It turned out that such region is just limited enough to provide a reliable reading of the medium even with high birefringence values occurring in this region.

Particularly preferred, the region extends radially outwards and essentially adjacent to an axially protruding structure, the structure being formed out uniformely with the substrate an in particular forming a clamping area. Due to their higher thickness, after a moulding process such axially protruding structures tend to cool down with a lower cooling rate than the radially adjacent substrate, providing material stress in the cooled state. This might give an explanation for radially oriented tension of the substrate material in the region adjacent to the clamping area, which might lead to an enhanced birefringence in this region. Especially this adjacent region is crucial concerning the optimization of a production throughput versus the size of the local birefringence. In this respect, it is useful if the region of enhanced birefringence is sited mainly in a lead-in area of the medium, the position of the lead-in area with respect to the center of the medium being defined according to a standard specification of a DVD. It turned out in experiments that the data stored in the lead-in area is much less critical in a reading process with respect of the birefringence of the substrate than it is the case with a data area following the lead-in area radially outwards. Measurements showed basically the effect that birefringence of the substrate material is rather high adjacent the clamping structures, but then continually drops in the radially outward direction. Now as axially protruding clamping structures are most critical with respect to adjacent birefringence of the substrate material (preferably polycarbonate), production parameters are well optimized if the birefringence is well exceeding 100 nm in the lead-in area adjacent to the clamping structures, but comes down to more normal values, in particular less than 100 nm, in radially more outward regions, for instance entering the sub-100 nm region within a radial distance of 24 mm or 36 mm. This gives a good balance of cooling rates and throughput versus birefringence values.

According to a seventh aspect of the present invention, the data capacity can be further increased by a second recording layer carried by a second substrate on the side of the second surface, and wherein the first recording layer is semi transparent (cf. claim 27) so that a laser beam can pass through the first recording layer for reading the second recording layer. The second substrate may have a thickness of only about 0.1 mm or less, in particular 0.08 mm to 0.15 mm. With this measure, the data capacity is doubled wherein only a minimum additional amount of polycarbonate is needed for the second substrate. The (lower) first substrate and the (upper) second substrate are bonded together by a thin resin layer which has a thickness of about 0.02 to 0.08 mm, in particular about 0.05 mm. The (lower) first substrate has a thickness of about 0.4 mm to 0.6 mm, in particular about 0.50 to 0.56 mm, in particular about 0.525 mm.

For manufacturing the second substrate, it is possible to use an extruded sheet of polycarbonate which is e.g. 0.1 mm thick, and to create the data image on the surface by using a standard nickel stamper in a hot embossing press. The second substrate may then be coated with a fully reflective metal coating to create the recording layer and be bonded together with the first substrate by the thin resin layer, e.g. a bonder cured by UV light through the first substrate.

Another example of manufacturing the second substrate is to use a moulded substrate of plastic, in particular PMMA, and to create the data image on the surface by using a standard nickel stamper (known as 2p process). The second substrate may then be coated with a fully reflective metal coating to create the recording layer and be bonded together with the first substrate by the thin resin layer, e.g. a bonder cured by UV light through the first substrate. Then, the substrate of plastic can be peeled off the metal coating and can be re-cycled. The metal coating can be protected using a conventional lacquer.

According to an eighth aspect of the present invention, the inventive method of manufacturing an optical recording medium of the present invention comprises the steps of a) fixing the optical recording medium in a predetermined shape and b) applying energy to the fixed optical recording medium (cf. claim 45). When replicating conventional optical recording media, for example CDs with a thickness of 1.2 mm, there are few problems due to deformations of the substrate after moulding and cooling. The optical recording medium of a preferred embodiment of the present invention is, due to the smaller thickness of the optical recording medium in the information area (thickness of about 0.6 mm) and/or the presence of rings or the like in the clamping area, more sensitive to deformations of the substrate being present after moulding and cooling. Therefore the optical recording medium might not have its predetermined shape, but another undesired shape.

By fixing the optical recording medium in a predetermined shape and applying energy to the fixed optical recording medium, the (actual) shape of the optical recording medium can - if necessary - be approximated to the predetermined (nominal) shape, because deformations present in the optical recording medium leading to an undesired shape are being reduced or removed.

When replicating such an optical recording medium, a preferred embodiment of the method of manufacturing may comprise the steps of c) moulding of polycarbonate into a predetermined form, thereby forming a substrate of the optical recording medium, d) cooling the substrate at a predetermined temperature for a predetermined time period, e) providing a recording layer on the substrate, f) providing a lacquer layer on the side of the second surface of the optical recording medium, and g) curing the lacquer layer. Additionally, a step of scanning the optical recording medium for quality check purposes may be provided. It has to be understood that the labelling of the different method steps is not necessarily indicating the sequence of performing the steps.

In a further preferred embodiment, the predetermined shape is substantially plane in at least a predetermined region of the optical recording medium, in particular in the entire region of the optical recording medium in which the tracks of a recording layer are arranged. When the optical recording medium has a plane shape, the reading laser in a conventional player does normally not have any problems focusing on the recording layer at a specific constant height. The term "substantially plane" means that the angular deviation is small enough to be played by the vast majority of players for the optical recording medium which are available on the market. An undesired actual shape is particularly given if a surface of an information area of the medium comprises an exceedingly high angle relative to an ideal plane, hence causing a light beam being reflected under an exceedingly high tilt angle. For an inventive medium, a typical limit of an angular deviation of the substrate surfaces of the information area has been determined to be about +/- 0.5° in the tangential direction and about +/- 1.3° in the radial direction, wherein a disc substrate thickness variation in the information area should not exceed +/- 10 µm. These tolerance values refer to the finished and printed end product.

Step a) of fixing the optical recording medium in a predetermined shape may comprise applying vacuum to the first or second surface of the optical recording medium. Preferably, the first (lower) surface of the optical medium is affixed to a support by use of a vacuum pump. Though, any other conventional way of fixing the optical recording medium may be utilized.

In step b) the energy applied to the fixed optical recording medium may be in the form of heat. This can be achieved by using an UV lamp, though any other suitable heat or light source may be employed. The energy or heat applied to the fixed optical recording medium can be controlled in that it has a predetermined quantity and is applied for a predetermined period of time (e.g. by a pulsed heat or light source). It has to be noted that energy applied to the fixed optical recording medium may also be of another energy form, for example light.

Step a) and step b) may be performed in different steps of the manufacturing process of the optical recording medium. For example, step d) of cooling the substrate at a predetermined temperature for a predetermined time period may comprise step a) of fixing the optical recording medium in a predetermined shape. This can be achieved by fixing the first surface of the optical medium by means of a vacuum pump for example during the transport of the optical recording medium from the moulding device used for step c) to the sputtering device used for step e).

In a preferred embodiment, step g) of curing the lacquer layer comprises the step a) and step b). In the lacquer curing device used for step g), the energy may be supplied by an UV lamp in the form of heat. The UV lamp is normally provided in the lacquer curing device for curing the lacquer layer applied in step f). Therefore, no additional equipment is needed for applying energy to the fixed optical recording medium, reducing cost and manufacturing time. Preferably, for an UV lamp in a lacquer curing device the energy is applied at more than 2.5 kW, in particular about 1 kW, for 1 second or less, in particular about 0.65 seconds. For fixing the optical recording medium in the lacquer curing device a vacuum pump may be employed, though other conventional means of fixing may be used.

After replicating the optical recording medium, the method of manufacturing may comprise a step h) of providing a printing layer on the side of the second surface of the optical recording medium. The printing layer is provided by screen printing, though another printing technique, like offset printing for example, may be employed.

When screen printing is used by means of a printing device, the optical recording medium is placed into a cavity of the printing device adapted to retain it in position (e.g. by its circumferential form and/or by means of nest pads) and it is lifted to the correct height. Additionally, vacuum is applied to the first (lower) surface by means of a vacuum pump. Then, a predetermined quantity of ink of a specific colour is placed on top of a mesh screen which is located in a mesh frame above the cavity. A blade is then pressed down and moved forward and backward across the mesh screen, thereby applying the ink to the second (upper) surface of the optical recording medium through the mesh screen. This process described for applying the ink may be repeated for several different colours. Then, especially when UV activated ink is used, the optical recording medium may be placed under a UV lamp of the printing device for activating the UV activated ink to the second (upper) surface of the recording medium.

In another preferred embodiment, step h) of providing a printing layer on the side of the second surface of the optical recording medium comprises step a) and step b). The vacuum pump of the printing device may be used for fixing the optical recording medium in a predetermined shape. The UV lamp of the printing device may be used for applying energy to the fixed optical recording medium. The advantage is that no additional equipment is needed to perform step a) and b), therefore reducing cost and manufacturing time. In a printing device, the energy may be supplied by the UV lamp in the form of heat at less than 8 kW, in particular about 6kW, for about 1 second or less.

The invention further comprises the use of a CD or DVD manufacturing system for manufacturing an optical recording medium as described above (cf. claim 60). Preferably, the system basically comprises a standard production line for the production of CDs. In a particular embodiment, the system comprises a die for moulding a substrate of the medium has a modified shape at least in a clamping area of the medium. In a further embodiment, the system comprises at least one support structure of at least one holding device for holding the medium has a modified shape at least in a clamping area of the medium. One particular aspect of the invention is that an inventive storage medium may be produced on standard production lines with only small changes being applied to the line, e.g. changing the die and/or changing holding and transfer devices according to the special shape of the recording medium. In this respect it is very cost effective to use existing CD-production lines for the production, particularly if the produced medium can be read with a DVD player and has the according data format and data density of a DVD. This adds to a major saving of investment costs for existing manufacturing plants as part of an increasing demand for DVDs is correlated with a decrease in demand of CDs. Even more, CD production lines are mostly cheaper to buy than DVD lines.

The invention further comprises a device for producing an optical recording medium as described above (cf. claim 64). Advantageously, this device comprises a die for moulding a substrate of the medium which has a modified shape with respect to standard CD- or DVD-moulds at least in a clamping area of the medium and/ or at least one holding device for holding the medium having a modified shape, with respect to a standard CD-holder or standard DVD-holder, at least in a clamping area of the medium.

### Brief description of the drawings:

- Fig. 1: shows a partial cross-sectional view of a known DVD-5;
- Fig. 2: shows a partial cross-sectional view of a known DVD-9;
- Fig. 3: shows a partial cross-sectional view of a known DVD-10;
- Fig. 4: shows a partial cross-sectional view of a known CD;
- Figs. 5: and 6 show microscope pictures of a recording layer of a CD and of a DVD, respectively;
- Fig. 7: shows a cross-sectional view of an optical recording medium according to a first embodiment of the present invention;
- Fig. 8a: shows a partial cross-sectional view of a known CD with a laser beam focused on the recording layer;
- Fig. 8b: shows a partial cross-sectional view of a known DVD with a laser beam focused on the recording layer;
- Fig. 8c: shows a partial cross-sectional view of an optical recording medium according to the first embodiment of the present invention with a laser beam focused on the recording layer;
- Fig. 9: is a schematic drawing of a laser focusing mechanism and a photo diode for reading an optical recording medium;
- Fig. 10: shows a partial view of a clamping mechanism of a disc drive;
- Fig. 11: shows an enlarged cross-sectional view of the clamping area of the optical recording medium of the first embodiment of the present invention;
- Fig. 12: shows a cross-sectional view of an optical recording medium according to a second embodiment of the present invention;
- Fig. 13: shows a top view of a preferred embodiment of the invention;
- Fig. 14: shows a flow diagram of a manufacturing method of an optical recording medium;
- Fig. 15: shows a cross-sectional view of a printing device.

### Detailed description of the invention:

For a full understanding of the invention, the physical formats of DVDs and CDs according to the state of the art are discussed in the following. **Fig. 1** shows a partial cross-sectional view of a known DVD-5. A DVD-5 comprises an information disc (bottom disc) **1** and a blank or dummy disc (top disc) **2** both made of polycarbonate and bonded together by a resin layer **4**. The upper surface of the information disc is structured and carries a recording layer **3** made of aluminum. The recording layer **3** forms so-called pits and lands which correspond to the data stream stored on the DVD-5 (the total storage capacity of a DVD-5 is 4.7 GB). The total thickness of a DVD-5 is about 1.2 mm, wherein the thickness of the information disc **1** has a thickness of about 0.6 mm so that the recording layer **3** is positioned with a distance of about 0.6 mm from the outer surface of the information disc **1**. For reading the data stream stored on the DVD-5, a laser beam **5** is focused on the recording layer **3**.

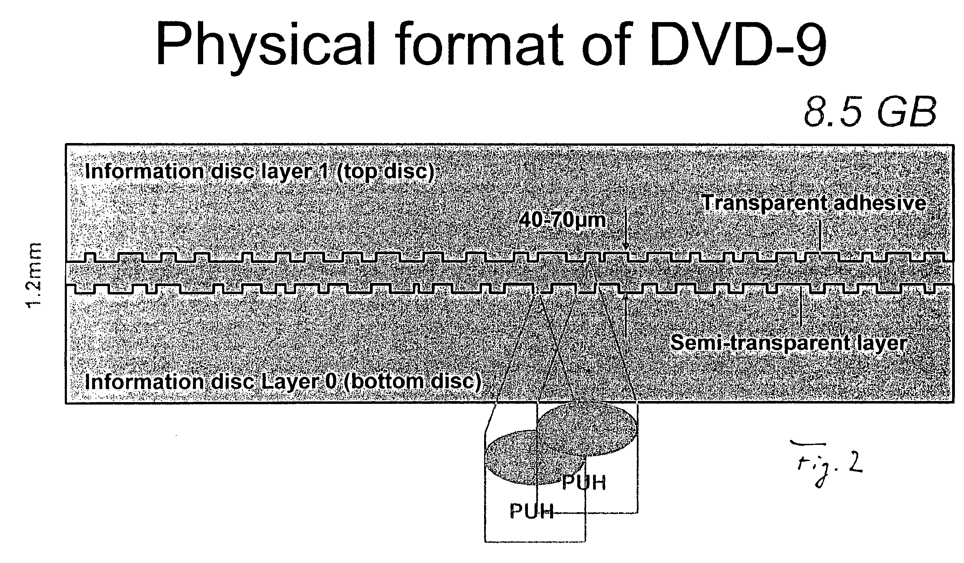

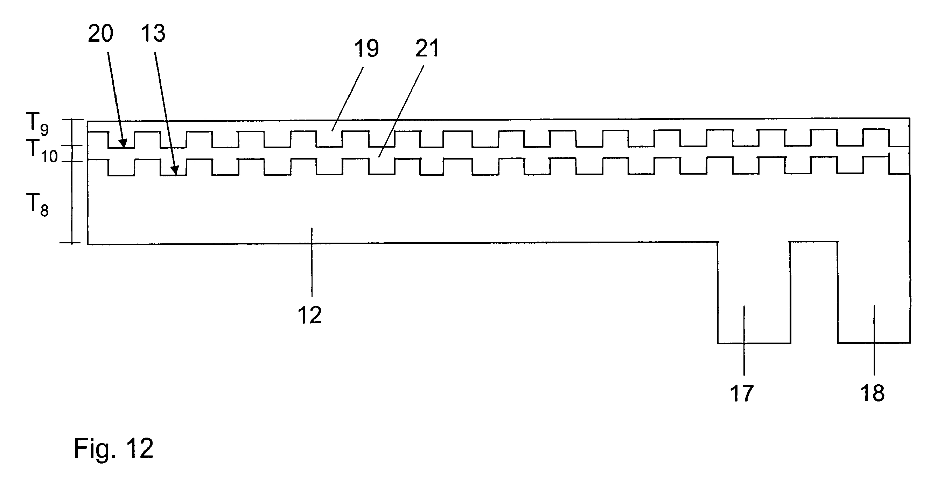

**Fig. 2** shows a partial cross-sectional view of a known DVD-9 having a total storage capacity of 8.5 GB and a total thickness of also 1.2 mm. A DVD-9 has two information discs **1** and **1'** with two recording layers 3 and 3'. The first (lower) recording layer **3'** is semi-transparent so that the laser beam can alternatively be focused on the first (lower) or the second (upper) recording layer from the bottom side. For this purpose, a transparent adhesive is used for bonding the information discs together. Further, the laser beam system or the convection lens system of the laser is adjustable so that the focus of the laser beam is located on the desired recording layer. A schematic drawing of such a focusing mechanism **6** for a laser **7** is shown in **Fig. 12**. The laser beam is reflected by the recording layer and is then directed by a semi-permeable mirror to a photo diode **8**.

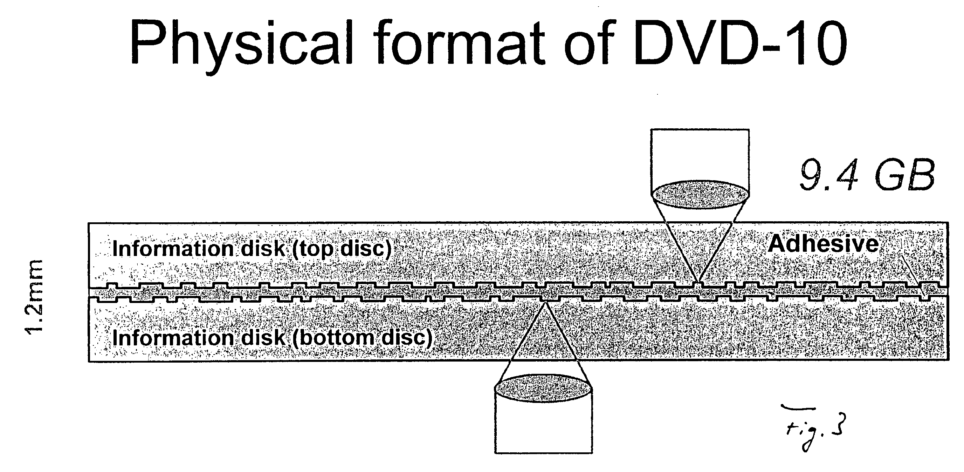

**Fig. 3** shows a partial cross-sectional view of a known DVD-10 having a total storage capacity of 9.4 GB and a total thickness of also 1.2 mm. The physical format is similar to a DVD-9. However, the (second) upper recording layer **3'** is read by a second laser beam **5'** which is arranged on the side of the second (upper) information disc (opposed to the first laser beam **5**).

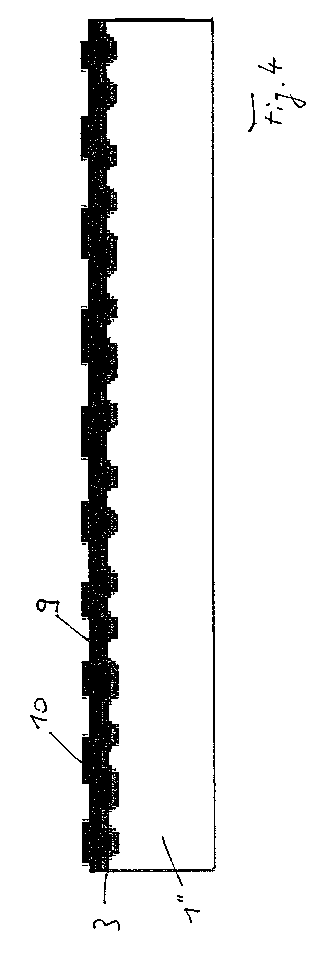

Finally, **Fig. 4** shows a partial cross-sectional view of a known CD which only comprises one disc **1"** made of polycarbonate. The recording layer **3** is only covered by a protective lacquer **9** which usually carries a printed layer **10**. The total thickness of a CD is again about 1.2 mm. However, the recording layer is not positioned in the center of the recording medium (between two discs), but at the top the recording medium. Therefore, the distance from the lower surface of the disc **1"** to the recording layer **3** is about 1.0 mm to about 1.15 mm. Since the CD is identically positioned within the drive like a DVD (in case of a combinational drive which is suitable for DVDs and CDs), the focusing mechanism **6** must be suitable to focus the laser beam to the height of the recording layer of the CD which is higher than the recording layer(s) of a DVD.

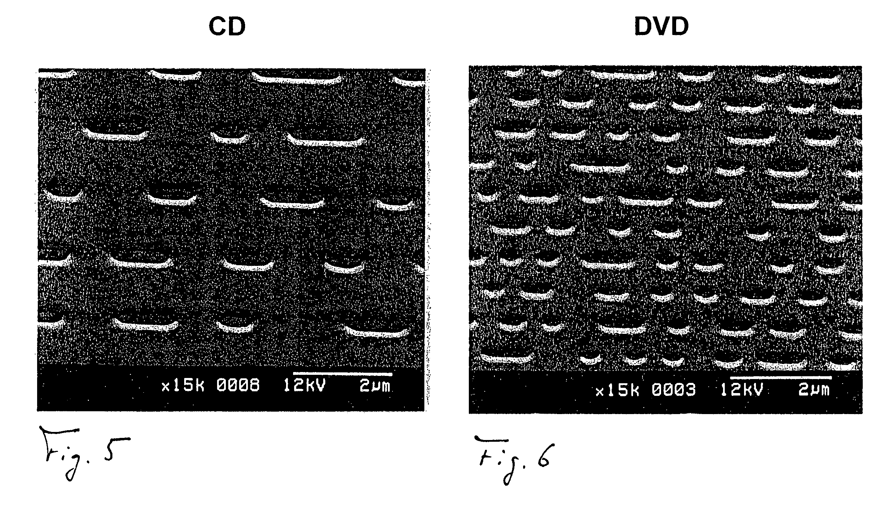

In this context, it has to be noted that a laser for reading a DVD has a wavelength of about 650 nm, and a laser for reading a CD has a wavelength of about 780 nm. Therefore, a combinational drive which is suitable for DVDs and CDs needs to have two lasers for providing these two wavelengths. The reason why different wavelengths are necessary is that the height difference between pits and lands of the recording layer are different for DVDs and for CDs. This height difference must be about λ/4, i.e. 650nm/4 (+/- 4%) for a DVD, and 780nm/4 (+/- 4%) for a CD. In addition, the pit and land structure of a DVD is significantly smaller compared to a CD, as can be seen in **Figs. 5** and **6** which show microscope pictures of a recording layer of a CD and of a DVD, respectively.

**Fig. 7** shows a (schematic) cross-sectional view of an optical recording medium according to a first embodiment of the present invention. The optical recording medium comprises an information disc or a substrate **12** and a recording layer **13** arranged on one side of the substrate **12**, wherein the optical recording medium has a predetermined clamping area **14**. The recording layer **13** is covered by a lacquer layer **13'**. The optical recording medium may have a thinner thickness in the area of the recording layer (outside of the clamping area) of - for example - only about 0.6 mm or even less. In particular, the thickness **T₁** of the optical recording medium in an area outside of the clamping area is in the range between 0.4 to 0.7 mm. However, it is to be understood that the invention is not limited to a specific thickness of the optical recording medium. Also a total thickness **T₂** of the optical recording medium in the outer section of the clamping area **14** of about 1.2 mm is possible.

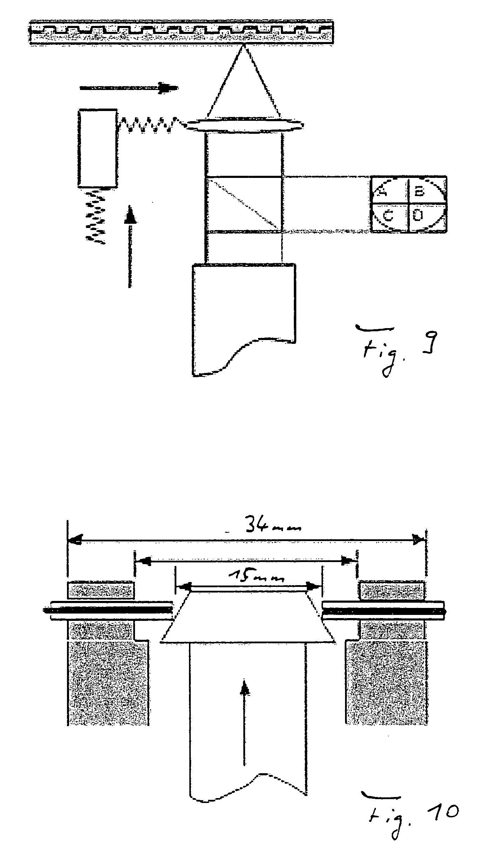

When the inventive optical recording is clamped in a drive, the recording layer has a different height compared to recording layers of known DVDs. As stated before, the recording layer(s) of a DVD according to the state of the art is/are arranged in its center (see also **Fig. 8b** showing a partial cross-sectional view of a known DVD with a laser beam focused on the recording layer). Contrary to that, the recording layer of a CD according to the state of the art is arranged at the top (see also **Fig. 8a** showing a partial cross-sectional view of a known CD with a laser beam focused on the recording layer). According to the present invention, the optical recording medium has a layer structure which is positioned at a height comparable to a CD, i.e. the recording layer is arranged at the top of an optical recording medium according to the present invention as shown in **Fig. 8c****.** Such a layer arrangement is not known in the prior art, because a laser beam of DVD drives is focused to a distance of **T₆** (of about 0.6 mm) with respect to the lower surface of the disc, wherein the position of this lower surface is defined by the clamping mechanism. However, in case of the situation as shown in **Fig. 8c****,** the distance **T₅** of the lowest part of the disc to the recording layer is significantly greater than **T₆**, namely between 1.0 mm and 1.2 mm, in particular about 1.1 mm. Some commercially available drives which are only suitable for reading DVDs have no height adjustment mechanism as shown in **Fig. 9**. Therefore, an inventive optical recording medium shown in **Fig. 8c** can not be read with such DVD drives, because the recording layer is at a height of about 1.1 mm (and not 0.6 mm).

Nevertheless, the inventive optical recording medium shown in **Fig. 8c** can be read with a drive which is suitable for reading DVDs and CDs, because such drives have a height adjustment mechanism as shown in **Fig. 9**. As a result, the inventive optical recording medium of **Fig. 8c** has a recording layer positioned at a height as the recording layer of a CD, and can be read in a drive by - for example - a 650 nm laser which is or can be focused on this recording layer.

**Fig. 12** shows a cross-sectional view (not to scale) of an optical recording medium according to a second embodiment of the present invention, which comprises all features of the first embodiment of the present invention described above. However, instead of a single substrate, the optical recording medium according to the second embodiment of the present invention comprises a second recording layer **20** carried by a second substrate **19** on the side of the second surface. The second substrate **19** may have a thickness **T₉** of only about 0.1 mm or less, in particular 0.08 mm to 0.15 mm. With this measure, the data capacity can be doubled wherein only a minimum additional amount of polycarbonate is needed for the second substrate. The (lower) first substrate **12** and the (upper) second substrate **19** are bonded together by a thin resin layer **21**, which has a thickness **T₁₀** of about 0.02 to 0.08 mm, in particular about 0.05 mm. The (lower) first substrate **12** has a thickness **T₈** of about 0.4 mm to 0.6 mm, in particular about 0.50 to 0.56 mm, in particular about 0.525 mm.

Besides the layer structure and the above mentioned measures for increasing the data capacity of the inventive optical recording medium, it is further advantageous for all embodiments of the present invention to provide the inventive optical recording medium with the following mechanical aspects:
Trials in the prior art with optical recording discs having a reduced thickness in the area of the recording layer compared to common DVDs or CDs (having a thickness of about 1.2 mm) were not successful, because of the reduced stiffness and/or reduced shape stability of the discs. Therefore, the reliability of such disc was not satisfying (i.e. the discs could not be played on all types of players available on the market). However, with the optical recording medium according to the present invention, this drawback is significantly reduced or even completely avoided by means of the following aspect of the present invention.

According to a further aspect of the present invention, the optical recording medium has a first ring **17** on the (lower) first side of the optical recording medium which extends at least in the outer section of the clamping area of the optical recording medium. According to the present DVD/CD standard, the clamping area is defined by an area located within a radius of about 17 or 18 mm with respect to the axis of the optical recording medium (the diameter of the clamping area is about 35 mm, e.g. 34 mm as shown in **Fig. 10**). Further, it is preferred to provide a second ring **18** on the first side of the optical recording medium which extends at least in the inner section of the clamping area of the optical recording medium.

The first ring **17** has a thickness **T₃** which is slightly greater than the thickness **T₄** of the second ring **18** as shown in **Fig. 7****.** When both rings are pressed down to a flat surface of a clamping means, the (outer) first ring touches the surface first, and then - by increasing the clamping force - the (inner) second ring also touches the surface so that the inner edge of the optical recording medium is deformed downwardly with respect to the area at the (outer) first ring. As a result, the optical recording medium has an improved shape stability when it is clamped in a drive so that the playability is more reliable. It has turned out that a height difference of only 0.02 mm is sufficient to achieve this effect. As an example, the following thicknesses of T₄ = 0.54 mm and T₃ = 0.56 mm (corresponding to total thicknesses of T₁ + T₄ = 1.18 mm +0.1/-0.04mm, and T₁ + T₃ = 1.20 mm +0.1/-0.04mm) may be used. The difference between **T₄** and **T₃** can also be about 0.01 mm.

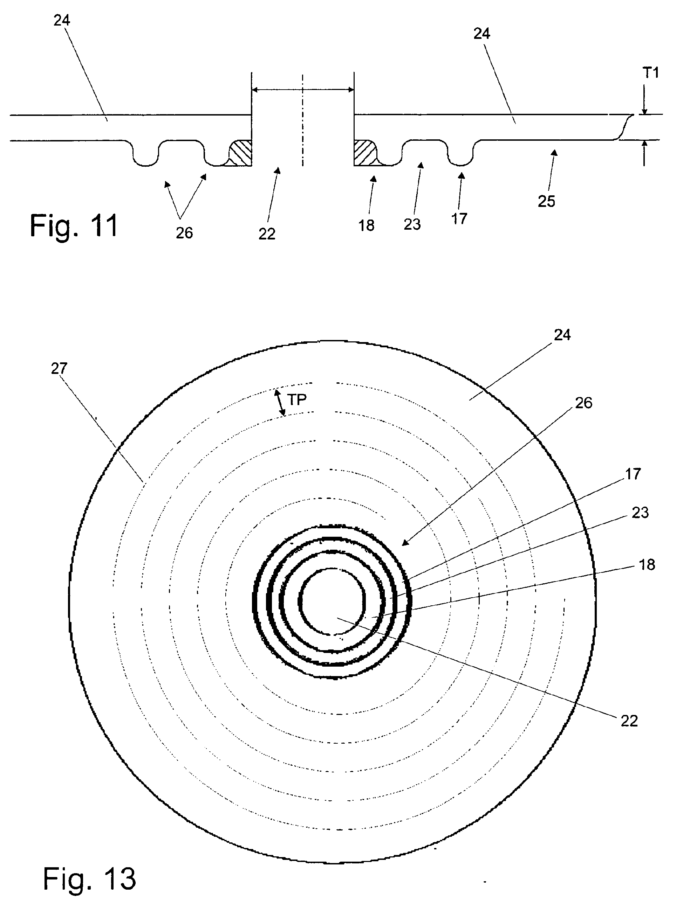

**Fig. 11** shows an enlarged cross-sectional view of the clamping area of the optical recording medium of the first embodiment of the present invention. The (inner) second ring may be distanced from the center hole (having a diameter of 15.0 mm, as shown in **Fig. 10**). However, as indicated by the hatched areas, the second ring may also have an inner diameter defined by the center hole, wherein the second ring has a relatively sharp edge. With that, the optical recording medium is centered more precisely in a drive so that the playability is improved. In addition, radial forces caused by an imbalance of the optical recording medium are better transmitted to the driving spindle.

**Fig. 13** shows a top view of an embodiment of the invention as displayed in **Fig. 11**, wherein the layout of the clamping area with an inner ring **18** and an outer ring **17** is similar to the hatched version of the cross sectional view of **Fig. 11**. The inner sidewall of the inner ring is aligned with the inner sidewall of the center hole **22**. The inner ring **18** has the same inner diameter of 15 mm as the center hole **22**. Its outer diameter is about 22.5 mm, the ring **18** thereby having a radial width of about 3.8 mm. A gap **23** is provided between the inner ring **18** and the outer ring **17**, the substrate thickness at the gap **23** being essentially the same as the thickness **T₁** of the information area **24**. It is to be understood that the thickness of the gap region **23** can differ depending on the demanded mechanical properties and/or the specific production process. The radial width of the gap **23** is about 3 mm. The inner diameter of the outer ring **17** is about 28.7 mm and its outer diameter is about 34.5 mm, giving the outer ring a radial width of about 2.9 mm. From the outer sidewall of the outer ring **17**, the substrate extends radially with a constant thickness **T₁**. This thickness **T₁** is most preferred in the range of 0.575 mm to 0.595 mm.

The rings **17**, **18** are to be understood as axially protruding structures with respect to the lower surface **25** of the medium. As already mentioned above, the (axial) thickness of the rings is slightly different in order to enhance geometry and/or stability in the clamped state. In particular, the thickness of the finished disc (substrate plus at least a layer of lacquer on the upper surface) at the position of the inner ring **17** is about 1.18 mm and is about 1.2 mm at the position of the outer ring **18**. The axial height of the rings with respect to the bottom surface **25** can typically be 0.55 mm for the outer ring and 0.53 mm for the inner ring.

It is to be understood that instead of the geometric shape of "rings", the axially protruding structures can be of different shape in order to provide a suitable clamping area. For instance, the axial protrusions can be formed like a number of dots and/or a multitude of radially extending short lines (not displayed).

Due to the above described axially protruding clamping structures, the cooling of the disc after casting the substrate in a moulding process is rather inhomogeneous. The thicker ring portions **17, 18** tend to cool down slower than the thinner information area **24**. This leads to a stress or inner tension of the resulting solid material. Such stress has effects on the optical properties like birefringence of the material, in particular if it is a polymer like polycarbonate (PC). The birefringence of the material must not exceed certain values. According to the specification for read only DVDs, the birefringence value of the substrate must not exceed 100 nm.

Now birefringence contributions being caused by inhomogeneous cooling could possibly be avoided by a much slower and better controlled cooling period, in particular slow cooling without removing the substrate from the mould. On the other hand, this would limit the throughput of a production line and cause the product price to become too high.

It has been found out that a reasonable and competitive throughput of about 3 seconds moulding time can be achieved if the birefringence is allowed to be in the range between 110 nm and 120 nm at least in a region close to the outer limits of the clamping area, e.g. the outer ring **17** in the above describes example. In this region of high birefringence, usually the lead-in area according to the DVD specification is positioned. The readout capabilities of conventional DVD players of the lead-in area turned out to be much better at high birefringence than in the data area following the lead-in area. Thereby the throughput of a production line can be optimized by allowing higher birefringence values than a standard DVD at least in a limited region. It turned out that inventive media could be reliably read by the majority of DVD players if the birefringence dropped down to values of below 100 nm within a radius of 36 mm. In order to give a preferred safety margin, the birefringence should drop below 100 nm even earlier, in particular at a radius not greater than 24 mm.

It is to be understood that the axially protruding structures need not necessarily be casted together with the rest of the substrate. It would be possible to bond e.g. ring-like structures to an entirely flat substrate disc, hence reducing birefringence problems as described above.

In a further embodiment according to the invention, the optical recording medium has a data region which is formed out as a continuous track path **27** of data structures in the form of pits and lands which is spirally wound. Adjacent lines of the spirally wound path have an essentially constant distance which is named the track pitch TP. Such track patch **27** with track pitch TP is schematically displayed in **Fig. 13**. For standard DVDs, such track patch usually starts after a lead-in-area (not shown) and ends before a lead-out area (not shown) of the medium. In the specification of a standard DVD, the track pitch is specified as 740 nm +/- 30 nm, wherein the average track pitch is specified as 740 nm +/- 10 nm. Astonishingly experiments gave the result that a reliable readout is possible by the vast majority of DVD players even with smaller track pitches than 710 nm. Careful evaluation result in a most preferred track pitch **TP** of between 670 nm and 690 nm, in particular about 680 nm. With a track pitch **TP** of 680 nm almost no disadvantages in the readout reliability of an inventive medium on standard DVD players occurred. This adds to a greater data capacity compared to a standard DVD by an amount of 8.8%.

Another way of increasing the possible data capacity was found by increasing the maximum diameter of the useful data containing track path. The outer diameter of a standard DVD is 120 mm, the maximum diameter of the data containing track path **27** (without the lead-out-area) being specified as 116 mm. Experiments showed that almost all DVD players can reliably play an inventive medium with an outer diameter of the data area of more than 116 mm, in particular up to about 118 mm. This increases the data containing area (and hence the data capacity) by more than 4%.

By at least one of the above mentioned measures of lowering the track pitch **TP** and/or increasing the maximum data region, it can be achieved that an inventive single layer disc has a data capacity of well above the 4.7 GB which are the specified value for a standard single layer DVD. Most preferred, the data capacity is at least 5 GB or even, by means of a combination of the measures, in the range of 5.4 GB. A value of 5.42 GB has been reached without reducing readout reliability of common DVD players.

Such enhanced data capacity gives a simple and effective copy protection for the medium if the capacity is actually used. It is not possible to write such amount of data to standard 4.7 GB writeable DVDs. The capacity of such available writeable discs cannot be enhanced to the amount of an inventive read-only medium, as e.g. the writing laser would not be stable enough to produce a reduced track pitch with the necessary precision.

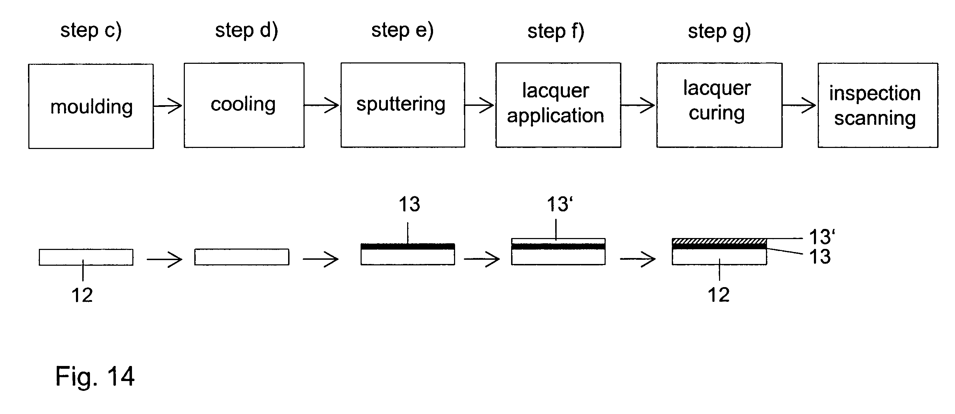

**Fig. 14** shows a flow diagram of a manufacturing method of an optical recording medium according to the present invention. When replicating such an optical recording medium, the method of manufacturing can comprise the steps of c) moulding of polycarbonate into a predetermined form by means of a moulding device, thereby forming a substrate **12** of the optical recording medium, e.g. by injection moulding, d) cooling the substrate **12** at a predetermined temperature for a predetermined time period by means of a cooling device, e) providing a recording layer **13** on the substrate **12**, e.g. by sputtering of a metal layer by means of a sputtering device, f) providing a lacquer layer **13'** on the side of the second surface of the optical recording medium by means of a lacquer application device, and g) curing the lacquer layer **13'** by means of a lacquer curing device (the hatched area in **Fig. 14** is to indicated the lacquer layer in its cured state). Additionally, a step of scanning the optical recording medium for quality check purposes can be provided. It has to be understood that the labelling of the different method steps is not necessarily indicating the sequence of performing the steps.

After moulding in step c) and cooling in step d), due to the smaller thickness of the optical recording medium in the information area (of about 0.6 mm) and/or the presence of rings or the like in the clamping area, deformations of the substrate could be present in the optical recording medium according to the present invention, leading to an undesired shape of the optical recording

In order to counteract this effect, the method of manufacturing an optical recording medium of the present invention can comprise the steps of a) fixing the optical recording medium in a predetermined shape and b) applying energy to the fixed optical recording medium in order to approximate the shape of the optical recording medium to the predetermined shape (step a) and step b) not shown in **Fig. 14**). By fixing the optical recording medium in a predetermined shape and applying energy to the fixed optical recording medium, the (actual) shape of the optical recording medium can be approximated to the predetermined (nominal) shape, because deformations present in the optical recording medium leading to an undesired shape are being reduced or removed.

In **Fig. 11**, the predetermined shape of the optical recording medium of the present invention is substantially plane in the entire region of the optical recording medium in which the track path **27** of the recording layer **13** is arranged, basically in the information area **24** (see also **Fig. 13**). The plane shape allows that the reading laser in a player does not have any problems when focusing on the recording layer **13** at a specific constant height. With the term "substantially plane" it is meant that the angular deviation is small enough to be played by the vast majority of players for the optical recording medium which are available on the market.

Fixing the optical recording medium in a predetermined shape can be achieved by applying vacuum to the first or second surface of the optical recording medium. Preferably, the first (lower) surface of the optical medium is fixed to a support by use of a vacuum pump. In step b), the energy applied to the fixed optical recording medium can be in the form of heat. This can be achieved by using an UV lamp, though any other suitable heat or light source can be employed. The energy or heat applied to the fixed optical recording medium can be controlled in that it has a predetermined quantity and is applied for a predetermined period of time (e.g. by a pulsed heat or light source). It has to be noted that energy applied to the fixed optical recording medium can also be of another energy form, for example light.

Step a) and step b) can be performed in different steps of the manufacturing process of the optical recording medium shown in **Fig. 14****.** For example, step d) of cooling the substrate **12** at a predetermined temperature for a predetermined time period can comprise step a) of fixing the optical recording medium in a predetermined shape. This can be achieved by fixing the first surface of the optical medium by means of a vacuum pump during the transport of the optical recording medium from the moulding device used for step c) to the sputtering device used for step e).

Another possibility is that step g) of curing the lacquer layer **13'** comprises step a) and step b). In the lacquer curing station used for step g) the energy can be supplied by an UV lamp in the form of heat. The UV lamp is normally provided in the lacquer curing station for curing the lacquer layer applied in step f). Therefore, no additional equipment is needed for applying energy to the fixed optical recording medium, reducing cost and manufacturing time. Preferably, for an UV lamp in a lacquer curing station the energy is applied at less than 2.5 kW, in particular about 1kW, for 1 second or less, in particular about 0.65 seconds. For fixing the optical recording medium in the lacquer curing station a vacuum pump can be employed, though other conventional means of fixing can be used.

After replicating the optical recording medium, the method of manufacturing can comprise a step h) of providing a printing layer on the side of the second surface of the optical recording medium (not shown in **Fig. 14**). The printing layer can be provided by screen printing, though another printing technique like offset printing for example can be utilized.

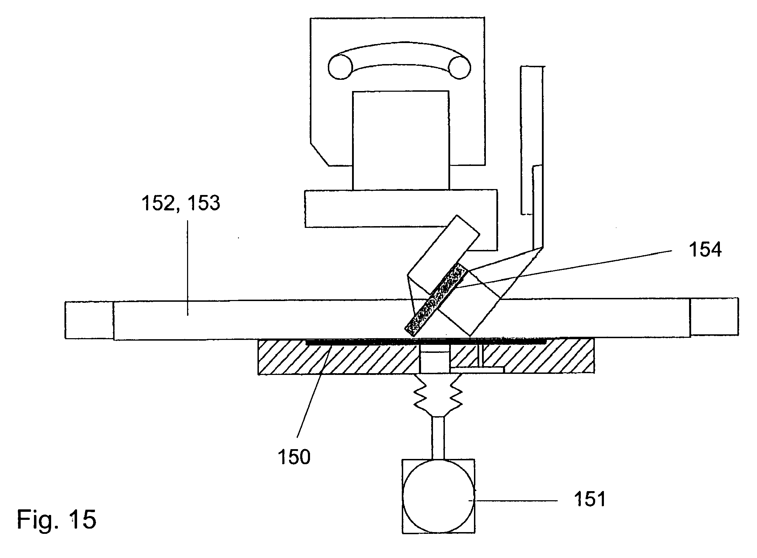

**Fig. 15** shows a cross-sectional view of a printing device used for manufacturing an optical recording medium using the screen printing technique. First, the optical recording medium is placed into a cavity **150** adapted to retain it in position and is then lifted to the correct height. Additionally, vacuum is applied to the first (lower) surface by means of a vacuum pump **151**. Then a predetermined quantity of ink of a specific colour is placed on top of a mesh screen **152** which is located in a mesh frame **153** above the cavity **150**. A blade **154** is then pressed down and moved forward and backward across the mesh screen **152**, thereby applying the ink to the second (upper) surface of the optical recording medium through the mesh screen **152**. Subsequently, especially when UV activated ink is used, the optical recording medium can be placed under an UV lamp (not shown in **Fig. 15**) of the printing device for activating the UV activated ink to the second (upper) surface of the recording medium. This process described for applying ink can be repeated for several different colours.

In the printing device of **Fig. 15**, step h) of providing a printing layer on the side of the second surface of the optical recording medium comprises step a) and step b). The vacuum pump **151** of the printing device is used for fixing the optical recording medium in a predetermined shape. The UV lamp (not shown in **Fig. 15**) of the printing device is used for applying energy to the fixed optical recording medium. The advantage is that no additional equipment is needed to perform step a) and b), therefore reducing cost and manufacturing time. In a printing device, the energy supplied by the UV lamp can be controlled, e.g. being less than 8 kW, in particular about 6kW, for 1 second or less.

## Claims

1. Optical recording medium having a first surface and a second surface, the optical recording medium comprising:
a substrate (12) and at least one recording layer (13) for storing data, wherein the structure of the recording layer (13) is formed such that the data can be read using a light having a wavelength of 650 nm±50 nm, or less,
**characterized in that**
the recording layer (13) is at least partially positioned at a distance (T₇) of less than 0.4 mm with respect to the second surface.

2. Optical recording medium having a first surface and a second surface, the optical recording medium comprising:
a substrate (12) and at least one recording layer (13) for storing data, wherein the structure of the recording layer (13) has pits and lands with a height difference of 650nm / 4 ± 10%, or less,
**characterized in that**
the recording layer (13) is at least partially positioned at a distance (T₇) of less than 0.4 mm with respect to the second surface.

3. Optical recording medium according to claim 1 or 2, **characterized in that** the recording layer (13) is entirely positioned at a distance (T₇) of less than 0.4 mm with respect to the second surface.

4. Optical recording medium according to one of the preceding claims, **characterized in that** the recording layer (13) is positioned at a distance (T₇) of less than 0.3 mm with respect to the second surface.

5. Optical recording medium according to one of the preceding claims, **characterized in that** the recording layer (13) is at least partially positioned at a distance (T₅) of more than 0.9 mm from a plane defined by a surface of a clamping area of the optical recording medium.

6. Optical recording medium according to claim 5, **characterized in that** the optical recording medium has an increased thickness (T₂) at the clamping area compared to the distance (T₁) between the first surface and the second surface.

7. Optical recording medium according to one of the preceding claims, **characterized in that** the recording layer (13) is at least partially positioned at a distance (T₈) of more than 0.4 mm from the first surface.

8. Optical recording medium having a first surface and a second surface, the optical recording medium comprising:
a substrate (12) and at least one recording layer (13) for storing data, wherein the structure of the recording layer (13) is formed such that the data can be read using a light having a wavelength of 650 nm ± 50 nm, or less,
**characterized in that**
the recording layer (13) is at least partially positioned at a distance (T₅) of more than 0.9 mm from a plane defined by a surface of a clamping area of the optical recording medium.

9. Optical recording medium having a first surface and a second surface, the optical recording medium comprising:
a substrate (12) and at least one recording layer (13) for storing data, wherein the structure of the recording layer (13) has pits and lands with a height difference of 650nm / 4 ± 10%, or less,
**characterized in that**
the recording layer (13) is at least partially positioned at a distance (T₅) of more than 0.9 mm from a plane defined by a surface of a clamping area of the optical recording medium.

10. Optical recording medium according to claim 8 or 9, **characterized in that** the plane defined by a surface of the clamping area is perpendicular to an axis (A) of the optical recording medium.

11. Optical recording medium according to one of claims 8 to 10, **characterized in that** said surface of the clamping area is on the side of the first surface of the optical recording medium.

12. Optical recording medium according to one of claims 8 to 11, **characterized in that** the clamping area defines the maximum thickness (T₂) of the optical recording medium.

13. Optical recording medium having a first surface and a second surface, the optical recording medium comprising:
a substrate (12) and at least one recording layer (13) for storing data, wherein the structure of the recording layer (13) is formed such that the data can be read using a light having a wavelength of 650 nm ± 50 nm, or less,
**characterized in that**
the optical recording medium has a clamping area with a thickness (T₂) which is greater than the distance (T₁) between the first surface and the second surface,
and **in that** the recording layer (13) is at least partially positioned at a distance (T₈) of more than 0.4 mm from the first surface.

14. Optical recording medium having a first surface and a second surface, the optical recording medium comprising:
a substrate (12) and at least one recording layer (13) for storing data, wherein the structure of the recording layer (13) has pits and lands with a height difference of 650nm / 4 ± 10%, or less,
**characterized in that**
the optical recording medium has a clamping area with a thickness (T₂) which is greater than the distance (T₁) between the first surface and the second surface,
and **in that** the recording layer (13) is at least partially positioned at a distance (T₈) of more than 0.4 mm from the first surface.

15. Optical recording medium according to one of the preceding claims, **characterized in that** the clamping area (14) is formed such as to achieve a deformation of or a tension in at least a part of the optical recording medium when it is clamped within a recording and/or reproducing device.

16. Optical recording medium according to one of the preceding claims, **characterized in that** the optical recording medium comprises a first ring (17) on a first side of the optical recording medium which extends at least in the outer section of the clamping area (14) of the optical recording medium.

17. Optical recording medium according to claim. 16, **characterized in that** the optical recording medium comprises a second ring (18) on the first side of the optical recording medium which extends at least in the inner section of the clamping area (14) of the optical recording medium.

18. Optical recording medium according to claim 17, **characterized in that** the first ring (17) has a thickness (T₃) which is equal or slightly greater than the thickness (T₄) of the second ring (18).

19. Optical recording medium according to one of the preceding claims, **characterized in that** the total thickness (T₂) of the optical recording medium in the outer section of the clamping area (14) is about 1.1 to 1.2 mm.

20. Optical recording medium according to one of the preceding claims, **characterized in that** the thickness (T₁) of the optical recording medium in an area outside of the clamping area is in the range between about 0.4 to 0.7 mm.

21. Optical recording medium according to one of the preceding claims, **characterized in that** the claming area is defined by an area located within a radius of about 16 or 17 mm with respect to the axis of the optical recording medium.

22. Optical recording medium according to one of the preceding claims, **characterized in that** the optical recording medium is a disc having an outer diameter of about 65 mm.

23. Optical recording medium according to one of claims 1 to 21, **characterized in that** the optical recording medium is a disc having an outer diameter of about 120 mm.

24. Optical recording medium according to one of the preceding claims, **characterized in that** the optical recording medium is designed to be read with a laser which is positioned on the side of the first surface of the optical recording medium.

25. Optical recording medium according to one of the preceding claims, **characterized in that** the optical recording medium has only one substrate (12).

26. Optical recording medium according to one of the preceding claims, **characterized in that** the recording layer is covered by a lacquer layer (13') and/or a printing layer (10) on the side of the second surface.

27. Optical recording medium according to one of claims 1 to 24, **characterized by** a second substrate (19) on the side of the second surface, wherein the second substrate (19) carries a second recording layer (20), and wherein the first recording layer (13) is semi transparent.

28. Optical recording medium according to claim 26, **characterized in that** the second substrate (19) has a thickness of about 0.08 mm to 0.15 mm.

29. Optical recording medium having a first surface and a second surface, the optical recording medium comprising:
a substrate (12) and at least one recording layer (13) for storing data, wherein the structure of the recording layer (13) is formed such that the data can be read using a light having a wavelength of optionally 650 nm ± 50 nm, or less,
wherein at least a data area comprises a spirally wound track path (27) of data structures, the track path having an essentially constant track pitch (TP) of adjacent tracks in a radial direction,
**characterized in that**
the size of the track pitch (TP) is smaller than 710 nm.

30. Optical recording medium according to claim 29, **characterized in that** an average value of the track pitch (TP) is smaller than 700 nm.

31. Optical recording medium according to claim 30, **characterized in that** the average track pitch (TP) is between 670 nm and 690 nm, in particular approximately 680 nm.

32. Optical recording medium according to one of claims 29 to 31, **characterized in that** the track pitch (TP) of all tracks of the data area are within an interval of between -4% and +4% with respect of an average value of the track pitch (TP).

33. Optical recording medium according to one of claims 29 to 32, **characterized in that** the track path (27) of the data area has a maximum diameter, the maximum diameter being greater than 95%, in particular at least 98 % of a total outer diameter of the recording medium.

34. Optical recording medium according to claim 33, **characterized in that** the maximum diameter of the track path (27) is greater than 116 mm, in particular approximately 118 mm, wherein the total outer diameter is approximately 120 mm.

35. Optical recording medium according to one of claims 29 to 34, **characterized in that** the recording medium has a maximum data capacity of more than 4.7 GB, in particular at least 5.0 GB.

36. Optical recording medium according to claim 35, **characterized in that** the data capacity is higher than 5.2 GB, in particular approximately 5.4 GB.

37. Optical recording medium according to one of claims 29 to 36, **characterized by** one or more features according to claims 1 to 28.

38. Optical recording medium having a first surface and a second surface, the optical recording medium comprising:
a substrate (12) and at least one recording layer (13) for storing data, wherein the structure of the recording layer (13) is formed such that the data can be read using a light having a wavelength of optionally 650 nm ± 50 nm, or less,
**characterized in that**
at least a region of the substrate has an optical birefringence value of more than 100 nm, in particular at least 105 nm, wherein the substrate in this region has a thickness of between approximately 0.4 mm and 0.7 mm.

39. Optical recording medium according to claim 38, **characterized in that** the birefringence value is lower than approximately 130 nm, in particular lower than 125 nm.

40. Optical recording medium according to claim 39, **characterized in that** the birefringence value is between 110 nm and 120 nm.

41. Optical recording medium according to one of claims 38 to 40, **characterized in that** the region has a radial distance of at least 18 mm from a center (A) of the medium.

42. Optical recording medium according to one of claims 38 to 41, **characterized in that** the region has a radial distance of less than approximately 36 mm from a center (A) of the medium, in particular not more than 24 mm.

43. Optical recording medium according to one of the claims 38 to 42, **characterized in that** the region extends radially outwards and essentially adjacent to an axially protruding structure (17), the structure (17) being formed out uniformely with the substrate (24) and in particular forming a clamping area (26).

44. Optical recording medium according to one of the claims 38 to 43, **characterized in that** the region is located in a lead-in area of the medium, the position of the lead-in area with respect to the centre of the medium being defined according to a standard specification of a DVD.

45. Method of manufacturing an optical recording medium preferably according to one of the preceding claims comprising the steps of:
a) fixing the optical recording medium in a predetermined shape and
b) applying energy to the fixed optical recording medium.

46. Method of manufacturing according to claim 45, **characterized in that** the predetermined shape is substantially plane in at least a predetermined region of the optical recording medium, in particular in the entire region of the optical recording medium in which the track path (27) of a recording layer (13) is arranged.

47. Method of manufacturing according to claim 45 or 46, **characterized in that** the energy applied to the optical recording medium is in the form of heat.

48. Method of manufacturing according to one of the claims 45 to 47, **characterized in that** the energy applied to the optical recording medium has a predetermined quantity and is applied for a predetermined period of time.

49. Method of manufacturing according to one of the claims 45 to 48, **characterized in that** fixing the optical recording medium in a predetermined shape comprises applying vacuum to the first or second surface of the optical recording medium.

50. Method of manufacturing according to one of the claims 45 to 49, **characterized in that** applying energy to the fixed optical recording medium comprises using an UV lamp.

51. Method of manufacturing according to one of the claims 45 to 50, comprising the steps of:
c) moulding of polycarbonate into a predetermined form, thereby forming a substrate (12) of the optical recording medium,
d) cooling the substrate (12) at a predetermined temperature for a predetermined time period,
e) providing a recording layer (13) on the substrate (12),
f) providing a lacquer layer (13') on the side of the second surface of the optical recording medium, and
g) curing the lacquer layer (13').

52. Method of manufacturing according to claim 51, **characterized in that** step d) comprises step a).

53. Method of manufacturing according to claim 52, **characterized in that** step g) comprises step a) and step b).

54. Method of manufacturing according to claim 53, **characterized in that** the energy is supplied by an UV lamp in the form of heat at less than 2.5 kW, in particular about 1 kW, for 1 second or less, in particular about 0.65 seconds.

55. Method of manufacturing according to one of claims 45 to 54, further comprising the step of:
h) providing a printing layer into on the side of the second surface of the optical recording medium. (12) of the optical recording medium,

56. Method of manufacturing according to 55, **characterized in that** the printing layer is provided by screen printing.

57. Method of manufacturing according to one of the claims 55 or 56, **characterized in that** step h) comprises step a) and step b).

58. Method of manufacturing according to claim 57, **characterized in that** the energy is supplied by an UV lamp in the form of heat at less than 8 kW, in particular about 6 kW, for about 1 second or less.

59. Optical recording medium, **characterized in that** it is manufactured by a method of manufacturing according to one of claims 45 to 58.

60. Use of a CD or DVD manufacturing system for manufacturing of an optical recording medium according to one of claims 1 to 44.

61. Use of a system according to claim 60, **characterized in that** the system basically comprises a standard production line for the production of CDs.

62. Use of a system according to claim 60 or 62, **characterized in that** a die for moulding a substrate of the medium has a modified shape at least in a clamping area of the medium.

63. Use of a system according to one of claims 60 to 62, **characterized in that** at least one support structure of at least one holding device for holding the medium has a modified shape at least in a clamping area of the medium.

64. Device for producing an optical recording medium according to one of claims 1 to 44.

65. Device according to claim 64, **characterized in that** a die for moulding a substrate of the medium has a modified shape with respect to standard CD-or DVD-moulds at least in a clamping area of the medium.

66. Device according to claim 64 or 65, **characterized in that** at least one support structure of at least one holding device for holding the medium has a modified shape, with respect to a standard CD-holder or standard DVD-holder, at least in a clamping area of the medium.

67. System comprising a drive for reading an optical recording medium, and a clamping mechanism for clamping an optical recording medium, wherein the clamping mechanism has a defined clamping area,
**characterized by** an optical recording medium according to one of the preceding claims.

68. System according to claim 67, **characterized by** a height adjustment mechanism for a laser device or for a lens system of a laser device.

69. System according to claim 67 or 68, **characterized by** a laser device which is suitable to emit a laser light having a wavelength of about 650 nm, or less.
